# EUROPEAN PATENT APPLICATION

(11) **EP 1 935 281 A1**
(43) Date of publication of application: **25.06.2008**
(21) Application number: 07254989.2
(22) Date of filing: 20.12.2007
(51) Int. Cl.: A46B 5/06, A46D 3/00, E06B 7/22, F16J 15/32

(54) **Flexible brush seal**

(30) Priority: 22.12.2006 US 615134
(71) Applicant: Marron, Patrick, Bay Village, OH 44140 (US)
(72) Inventor: Marron, Patrick, Bay Village, OH 44140 (US)
(74) Representative: Johnson, Richard Alan

(57) **Abstract**

A method of making a brush seal (10) includes the steps of providing a plurality of brush filaments (20), and bonding a flexible plastic backing (30) and a flexible plastic retainer (40) to the filaments (20) to secure the filaments (20) together and form a flexible brush seal (10). A flexible brush seal (10) adapted to provide a seal between a movable member and a structure includes a plurality of brush filaments (20); a flexible backing (30) securing together the brush filaments; and a flexible plastic retainer (40) bonded to the filaments (20), the retainer (40) being adapted for mounting on an exterior surface of the structure.

## Description

A brush seal is a device that is used to seal between a movable member and either a fixed member or a second movable member. For example, the brush seal might seal between a door and an edge of a wall, or against a loading dock. The brush seal includes a plurality of filaments that form the sealing element, rather than a solid structure such as a rubber molding.

A typical prior strip brush seal includes a plurality of plastic filaments that are looped around a steel rod. The looped middles of the filaments are then held together, on the rod, with a metal crimp strip. This crimped assembly is then slid lengthwise into a channel in a preformed plastic or metal retainer. The retainer is itself fixed in position, on a structure, thereby to hold the brush seal in place to perform its intended work.

In one aspect, the invention may provide a method of making a brush seal which includes the steps of providing a plurality of brush filaments, and bonding a flexible plastic backing and a flexible plastic retainer to the filaments to secure the filaments together and form a flexible brush seal. In another aspect, the invention may provide a flexible brush seal adapted to provide a seal between a movable member and a structure that includes a plurality of brush filaments; a flexible backing securing together the brush filaments; and a flexible plastic retainer bonded to the filaments, the retainer being adapted for mounting on an exterior surface of the structure.

In the drawings:
Fig. 1 is a cross-sectional view of a brush seal that is a first embodiment of the invention;
Fig. 2 is a perspective view of the brush seal of Fig. 1;
Fig. 3 is an elevational view of the brush seal of Fig. 1;
Fig. 4 is a flow chart illustrating schematically a method for making a brush seal;
Fig. 5 illustrates how a brush seal of the present invention can be rolled up;
Fig. 6 is a flow chart illustrating schematically a second method for making a brush seal;
Fig. 7 is a flow chart illustrating schematically a third method for making a brush seal;
Fig. 8 is a cross-sectional view of a brush seal that is another embodiment of the invention;
Fig. 9 is a cross-sectional view of a brush seal that is another embodiment of the invention;
Fig. 10 is a cross-sectional view of a brush seal that is another embodiment of the invention;
Figs. 11-16 are views showing brush seals of the present invention mounted on doors and on doorways; and
Figs. 17 and 18 illustrate flexibility of a brush seal of the present invention.

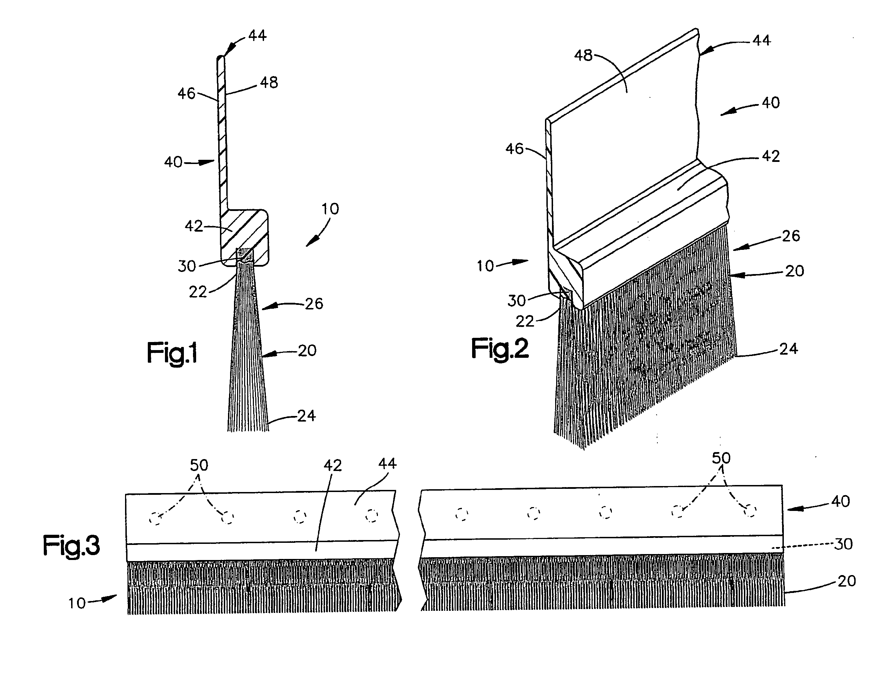

The invention relates to a brush seal, a method of making a brush seal, and the use of a brush seal. The invention is applicable to brush seals of varying different configurations and constructions. As representative of the invention, Fig. 1 illustrates a brush seal 10 that is a first embodiment of the invention.

The brush seal 10 includes generally a plurality of bristles or filaments 20, a backing 30, and a retainer 40. In the embodiment of Fig. 1, the retainer 40 and the backing 30 are formed as one piece, in a manner as described below. In other embodiments of the invention as illustrated below, the retainer 40 and the backing 30 are formed separately.

The filaments 20 in the illustrated embodiment are plastic or polymeric, for example polyethylene, although non-polymeric filaments 20 could be used in other embodiments of the invention. The filaments 20 in the illustrated embodiment are straight rather than looped. That is, each filament has an inner end 22 secured in the backing 30, and an opposite outer end or free end 24. The filaments 20 are assembled so that they are oriented parallel to each other and adjacent to each other to form a brush configuration.

The backing 30 is a material or substance that holds the filaments 20 together, that is, adjacent to each other in the desired configuration. The backing 30 secures the inner ends 22 of the filaments 20 together. The filaments 20 and the backing 30 together form a brush 26. The backing 30 is flexible and thus the brush 26 is flexible; it can be bent to some degree to form a non-linear shape for use in a flexible seal 10.

The retainer 40 is a device or portion of the brush seal 10 that is used to support the brush 26 in position for use in a specific application or environment. It is the final piece needed to assemble the brush seal 10 in its intended use--the mounting portion, etc. For example, the retainer 40 might be a long strip for mounting the brush 26 on the edge of a structure adjacent a doorway, to provide a seal against which a door can engage when the door is closed or closing.

The retainer 40 has a first portion 42 for engaging the brush 26 and a second portion 44 for engaging a structure. By "structure" is meant the thing to which the brush is attached to form a seal. In the illustrated embodiment of Fig. 1, the first portion 42 of the retainer 40 includes the backing, formed in a manner as described below.

The second portion 44 of the retainer 40, i.e., the portion by which the brush seal 10 is attached to or mounted on a structure, typically has a configuration adapted to engage the structure over all or a substantial portion of the length of the brush 26. Thus, if for example the retainer 40 is a long strip for mounting the brush seal adjacent a doorway, the second portion 44 of the retainer may have a flat configuration as shown in Figs 1-3 including parallel first and second major side surfaces 46 and 48. The retainer 40 may optionally be provided with one or more fastener openings (shown at 50 in Fig. 3) or other means for actually securing the retainer to the structure, as described below in detail.

The retainer 40 and the brush 26 are bonded together. That is, they are secured from movement relative to each other, without the use of discrete fasteners. The bond is a mechanical or chemical bond in which two materials adhere to each other over a surface area of each material, as opposed to a fastener. Thus, the bond can be of the type formed by a glue or other adhesive. Also, the bond can be of the type formed in which one material is melted or otherwise flows and adheres to another material. The retainer 40 is bonded to the filaments 20, either directly, or indirectly through the backing 30. There is no weaving of the filaments 20 or of any backing or retainer material. The product is not woven.

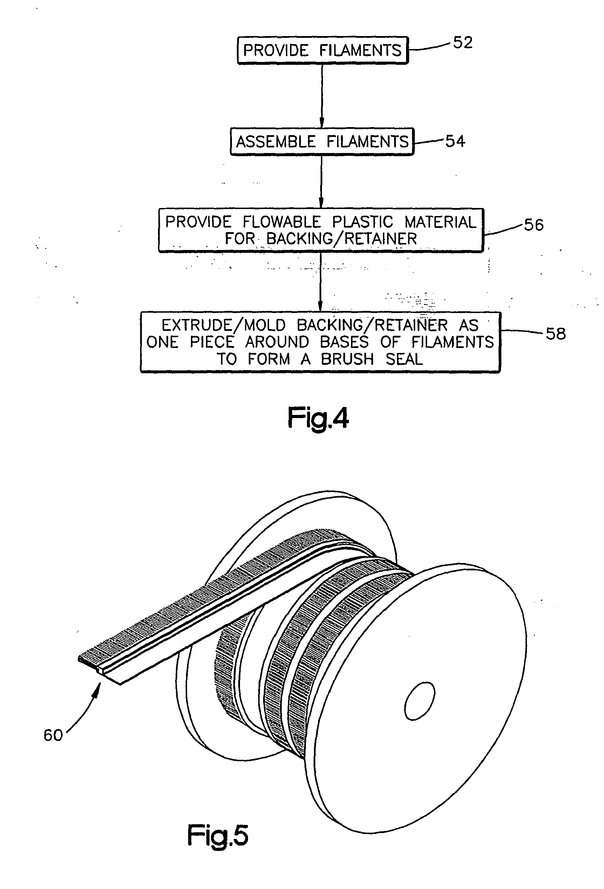

Fig. 4 is a flow chart illustrating schematically one method for making the brush seal of Fig. 1. In this method, the backing 30 and the retainer 40 are formed from the same material, by molding or extruding as one piece.

In step 52, the filaments 20 are provided. The filaments 20 are assembled in step 54. In step 56, a flowable plastic material is provided for the backing/retainer 30/40. In step 58, the backing/retainer 30/40 is formed as one piece, around the bases 22 of the filaments 20, to form a brush seal 10.

The combined backing/retainer 30/40 is preferably formed by molding or extruding the flowable material to the inner ends 22 of the filaments 20. Preferably, when the retainer 40 is formed in this manner, a separate bonding material is not needed between the first portion 42 of the retainer and the filaments 20.

The molding or extruding may be done with the use of heat. For example, the material of which the retainer 40 is formed can be heated to soften and form. Alternatively, the molding or extruding may be done without the use of heat. Thus, a material that is workable as needed at room temperature then sets or cures to final form. For example, a polymer resin might be usable, such as silicone cement.

The first portion 42 of the retainer 40 engages the inner ends 22 of the filaments 20. The first portion 42 of the retainer 40 thus forms or includes the backing 30 of the brush 26. This simultaneous formation of the backing and the retainer can eliminate a separate step of forming the brush 26 then forming the retainer 40 to the brush.

In this manner, the retainer 40 is bonded to the brush 26, with a backing 30 formed as well. As a result, the brush 26 and the retainer 49 are secured from movement relative to each other, without the use of discrete fasteners. The material of the retainer is flexible when the brush seal is completed. A flexible brush seal 10 is thus formed including the retainer 40 and the brush 26.

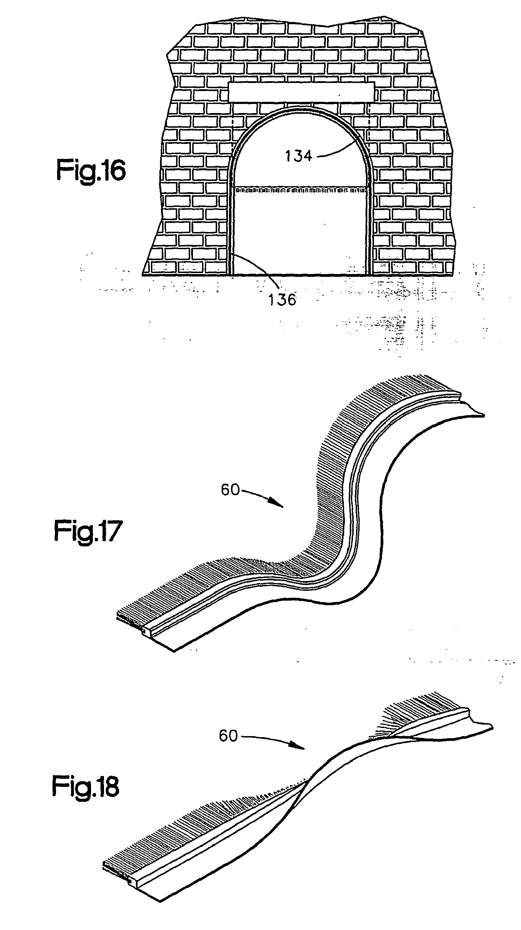

Fig. 5 illustrates one aspect of the flexibility of a brush seal 60 of the present invention. As illustrated in Fig. 5, the brush seal 60 can be rolled up for easy shipment and storage. Further, as illustrated in Fig. 17, the brush seal 60 is flexible about axes extending parallel to the length of the filaments. As illustrated in Fig. 18, the brush seal 60 is flexible about an axis extending parallel to the length of the brush seal as a whole. Benefits of the flexibility are described below in detail.

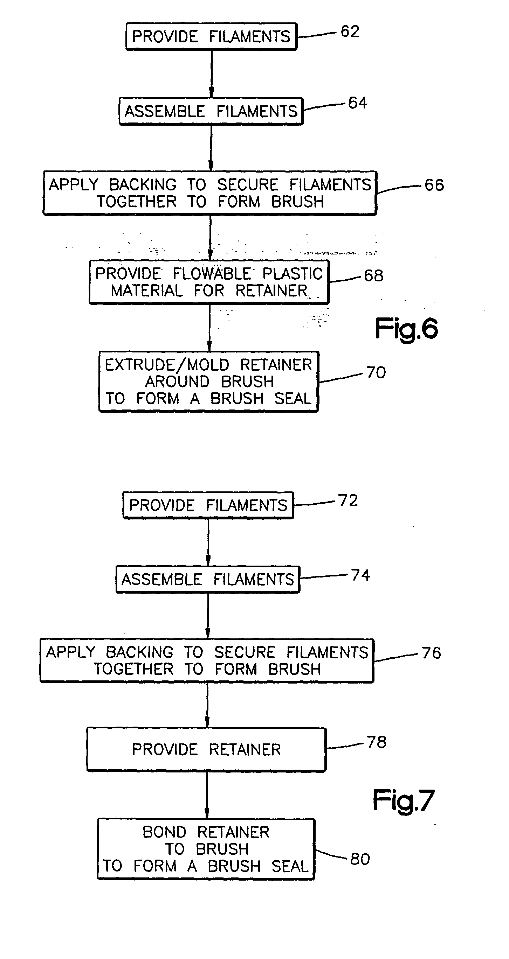

Fig. 6 is a flow chart which illustrates schematically another embodiment of the invention in which a retainer is formed on or around a preformed or finished brush. In this method, the backing and retainer are formed from the same material, by molding or extruding as one piece. In step 62, the filaments are provided. The filaments are assembled in step 64. In step 66, a backing is applied to secure the bristles together to form a brush. The brush is thus preformed, that is, formed prior to the addition of the retainer.

In step 68, a flowable plastic material is provided for the retainer. In step 70, the retainer is extruded or molded around the brush to form a brush seal. The first portion of the retainer is molded or extruded to or around the backing of the brush. The thus formed retainer first portion may at least partially enclose the backing. For example, the first portion of the retainer may define a channel that receives the backing. Preferably, when the retainer is formed in this manner, a bonding material is not needed between the first portion of the retainer and the backing. The molding or extruding may be done with or without the use of heat, as described above.

In this manner, the retainer is bonded to the brush. As a result, the brush and the retainer are secured from movement relative to each other, without the use of discrete fasteners. A flexible brush seal is thus formed including the retainer and the brush.

Fig. 7 is a flow chart that illustrates schematically a third method of the invention in which a preformed or finished retainer is bonded to a preformed or finished brush. In steps 72, 74 and 76, the brush is formed. The brush includes a plurality of filaments secured in a flexible backing. The backing is preferably made from a polymeric material.

In step 78, a preformed retainer is provided. The retainer is a flexible member, preferably made from a polymeric material. The retainer has a first portion for engaging the brush. The first portion of the retainer may have a configuration adapted to at least partially enclose the backing of the brush. For example, the first portion of the retainer may define a preformed channel that receives the backing.

In step 80, the retainer is bonded to the brush to form a brush seal. A bonding material may optionally be provided between the first portion of the retainer and the backing, for example, an adhesive. In this manner, the retainer is bonded to the brush. As a result, the brush and the retainer are secured from movement relative to each other, without the use of discrete fasteners. A flexible brush seal is thus formed including the retainer and the brush.

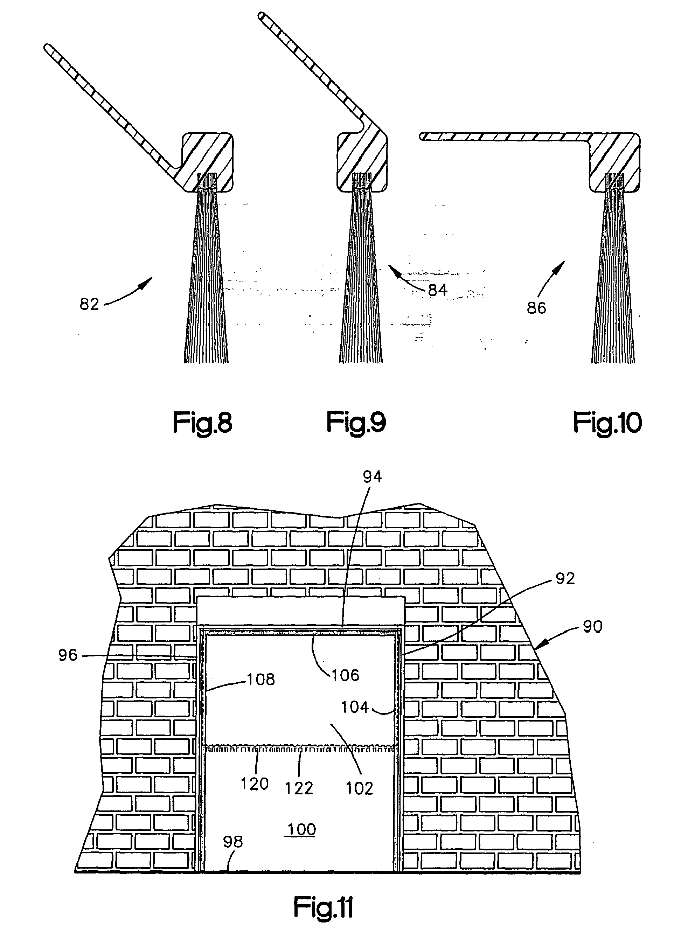

Figs. 8, 9 and 10 illustrate a few representative (not limiting) alternative configurations of a brush seal of the present invention. In Fig. 8, the second portion of the retainer of a brush seal 82 extends at an acute angle from a corner of the first portion closest to the filaments. In Fig. 9, the second portion of the retainer of a brush seal 84 extends at an acute angle from a corner of the first portion farthest from the filaments. In Fig. 10, the second portion of the retainer of a brush seal 86 extends at a right angle from a corner of the first portion farthest from the filaments. Other configurations are possible, of course.

Figs. 11-16 illustrate a few representative (not limiting) uses or applications of a brush seal of the present invention. The brush seal can be mounted on any movable element, such as a door, or on any fixed element, such as a wall.

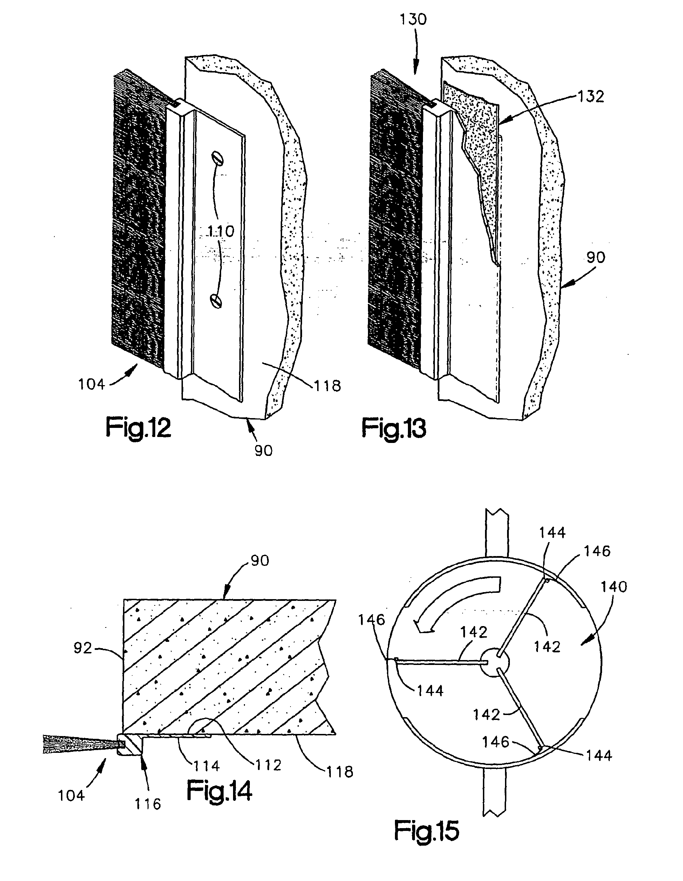

Shown in Fig. 11 is a structure in the form of a wall 90. The structure 90 has three linear edges 92, 94 and 96, and a floor 98, that define a doorway (opening) 100 that can be closed by a door shown schematically at 102. Three pieces of brush seal 104, 106 and 108 in accordance with the invention are secured to the edges 92-96 of the structure 90 adjacent the doorway 100. The brush seals 104-108 are secured via fasteners such as screws 110 (Fig. 12). As best seen in Fig. 14, the first major side surface 112 of the second portion 114 of the retainer 116 overlies the wall surface 118 adjacent the edge 92. Another piece of brush seal 120 is attached to the bottom edge 122 of the door 102.

When the door 102 is closed, the sides of the door engage the strips of brush seal 104 and 108 along the side edges 92-96. The top of the door engages the strip of brush seal 106 along the top edge 94 of the doorway 100. The brush seal 120 on the bottom 122 of the door 102 engages the floor 98 under the doorway 100. Each piece of brush seal effects a seal between the door 102 and the adjacent structure 90. The brush seal material can be provided, if desired, in one long piece that is cut to length, on the job site, to form the several individual pieces 92-96 and 120.

Fig. 13 shows an alternative method of mounting a brush seal 130 to the structure 90. Specifically, the brush seal 130 can be secured in position via an adhesive shown at 132. This can be an applied adhesive such as glue, or an adhesive strip, for example, double sided tape.

With a flexible seal, often a single piece can be provided to cover any application. In the example shown in Fig. 16, a single piece of flexible brush seal 134 is applied to the edge of an arched doorway 136. The single piece 134, because it is flexible, can extend around the entire edge, making installation mush simpler. As another example, one single piece of seal can be mounted along several adjacent linear edges, bending the material as needed at corners.

There are numerous other applications for which a flexible brush seal is usable where a rigid one would not be usable. Some examples include arched doors, irregular openings, curved headers; swing glass doors where mechanical fasteners are not appropriate; and any curved (non-linear) application where a continuous brush seal is required. (By non-linear is meant an application that can not be handled by a single piece of rigid brush seal.) Fig. 15 illustrates the use of a brush seal 146 on a revolving door 140. The revolving door 140 has glass panels 142 with glass edges 144. The brush seal 146, which is made from plastic, can be applied directly to the edges 144 of the door panels 142. This application can be made with adhesive or with fasteners. The lightweight, all plastic construction of the brush seal 146 can provide a significantly enhanced function and appearance.

Because the retainer and the brush are flexible, and the resulting brush seal is flexible, the seal can be transported in a rolled up condition, for example, in rolls, rather than in the long strips required when the retainer is rigid. An example of this is shown schematically in Fig. 5, described above. The extent to which the brush seal can be rolled is also dependent on the configuration of the retainer--a simple basically flat retainer is easier to roll than a three-dimensional configuration.

Another advantage of a roll of brush seal is that a user can purchase a single roll of material and cut it to length on the job--rather than having to lay out specific lengths ahead of time for purchase from a supplier, which can limit options on the job. The length of such strips of the rigid material is limited by shipping factors, etc. Typical rigid lengths that can be shipped are in the range of up to ten to twelve feet. Anything longer must be covered with two strips inline.

With a flexible seal, typically a single piece can be provided to cover any application. This has substantial benefits in terms of both manufacturing, delivery, and installation. The flexible seal can easily be mounted on or secured to a structure in a non-linear configuration. Using a rigid seal, such an application can not be handled easily. Several individual pieces would have to be cut to length and mounted, one along each side or section.

Another advantage flows from the all-plastic construction of the seal. Specifically, prior art seals use a steel rod around which the filaments are looped, and a steel crimp strip. The retainers used on the prior art brush seal are typically aluminum. Corrosion often results from this placement of dissimilar metals adjacent to each other--a very recognized and widely known problem that has existed for many years without any solutions being presented to the industry. Seals of this general type are used often in highly corrosive environments, for example, refrigerated and high moisture areas. This invention would be very beneficial in such uses. The all-plastic (no metal) construction can eliminate the corrosion problem.

## Claims

1. A method of making a brush seal, including the steps of:
providing a plurality of brush filaments; and
bonding a flexible plastic backing and a flexible plastic retainer to the filaments to secure the filaments together and form a flexible brush seal.

2. A method as set forth in claim 1 wherein the bonding step includes forming the backing and the retainer as one piece.

3. A method as set forth in claim 2 wherein the backing and the retainer are formed as one piece by extruding or molding.

4. A method as set forth in claim 1 wherein the bonding step includes securing the backing to the filaments to form a brush, then bonding the retainer to the brush.

5. A method as set forth in claim 4 wherein the bonding step includes extruding the retainer around the brush.

6. A method as set forth in claim 1 wherein the bonding step includes:
bonding the backing to the filaments to provide a finished brush, and thereafter
bonding a finished retainer to the finished brush.

7. A method as set forth in claim 1 wherein the bonding step includes making a length of brush seal that is in the range of from about 10 feet to about 20 feet long, and further including the step of rolling the length of brush seal into a roll having a diameter in the range of from about 1 foot to about 4 feet.

8. A method as set forth in claim 1 wherein the filaments are plastic.

9. A method as set forth in claim 1 wherein the step of bonding a retainer includes bonding a retainer having a mounting flange adapted for mounting of the brush seal on an exterior surface of a structure defining a doorway.

10. A flexible brush seal adapted to provide a seal between a movable member and a structure, the brush seal comprising:
a plurality of brush filaments;
a flexible backing securing together the brush filaments; and
a flexible plastic retainer bonded to the filaments, the retainer being adapted for mounting on an exterior surface of the structure.

11. A brush seal as set forth in claim 10 wherein the brush seal, including the retainer and the backing and the filaments, is rollable to form a compact roll for transport of the brush seal.

12. A brush seal as set forth in claim 10 that is free of metal.

13. A brush seal as set forth in claim 10 wherein the retainer includes a flange that is adapted to overlie the exterior surface of the structural edge, for securing the retainer and thus the brush seal to the edge.

14. A brush seal as set forth in claim 10 wherein the filaments and the backing and the retainer are non-woven.

15. A brush seal as set forth in claim 10 wherein the backing and the retainer are formed as one piece by extruding or molding.

16. A brush seal as set forth in claim 10 wherein the backing is secured to the filaments to form a brush, then retainer is bonded to the brush.

17. Apparatus comprising:
a doorway edge having a non-linear configuration; and
a flexible brush seal applied to the doorway edge over substantially the entire length of the non-linear configuration.

18. Apparatus as set forth in claim 17 wherein the flexible brush seal is all plastic.

19. Apparatus as set forth in claim 18 wherein the flexible brush seal includes a flexible plastic retainer and a flexible plastic backing and plastic filaments.

20. Apparatus as set forth in claim 19 wherein the flexible plastic retainer and the flexible plastic backing are formed as one piece.

21. A flexible brush seal consisting essentially of:
a plurality of brush filaments, and
a flexible backing and retainer bonded to the filaments.

22. A brush seal as set forth in claim 21 wherein the flexible backing and retainer comprise a single piece of extruded plastic.
